# EUROPEAN PATENT APPLICATION

(11) **EP 1 715 559 A1**
(43) Date of publication of application: **25.10.2006**
(21) Application number: 05008826.9
(22) Date of filing: 22.04.2005
(51) Int. Cl.: H02K 1/16, H02K 15/02

(54) **Grooved part of an electric motor**

(71) Applicant: ISA INNOVATIONS S.A., 1700 Fribourg (CH)
(72) Inventor: Benito Iziquierdo, Jose Antonio, 08034 Barcelona (ES); Flotats Giralt, Ivan, 08025 Barcelona (ES)
(74) Representative: Bugnion Genève

(57) **Abstract**

The present invention relates to a grooved part of an electric motor with permanent magnets. The grooved part is made of an interior ring (5) formed by a closing ring (8), teeth (7), and an exterior ring (10). Said closing ring, teeth, and exterior ring (10) are made by sintering, and further comprising winding of wires (12) around said teeth (7). The grooved part may be either the stator or the rotor of the motor.

## Description

The present invention deals with a typology, specifically grooved part of electric motors with permanent magnets, forming the rotor or stator of the motor as well as a system for the utilization of magnetic material composites in electric motors. The objective is in particular brushless motors with permanent magnet rotors, although it could be extended to motors with independent excitation rotors.

In the manufacture of brushless motors, the use of magnetic plates is very common as a way of channelling the flow through the coils. The magnetic plate consists of iron plates with siliceous varnish to avoid the flow of induced currents in the base material (Fe) due to flow variation. This flow variation is due to the rotor's rotation.

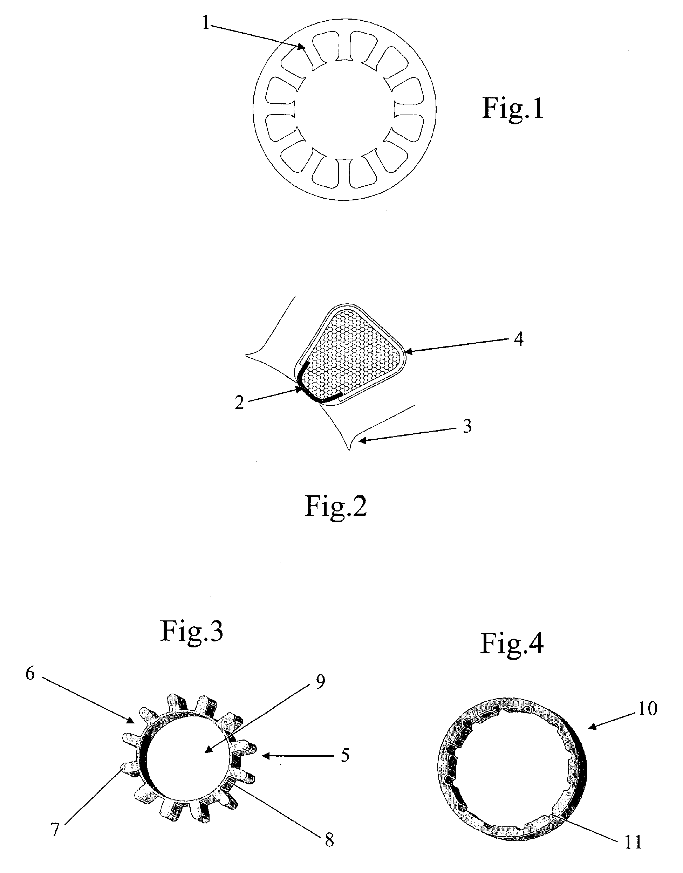

The magnetic plate is stamped to insert the wire of the motor winding and it can be used either in the rotor as well as in the stator depending on the type of motor. If the rotor geometry differs from one motor to another, depending on the number of poles and the wave form of work desired for the motor, it is usual when the stator is wound (no permanent magnets). It is stamped so that the slots remain open when the windings are placed inside, through the inner area (see in figure 1, reference 1) as they can be inserted through this part. This is a very common system for electric motor manufacturers, and there are companies dedicated to the insertion of the winding in the stator slots.

To prevent the winding from coming out of the slots (see figure 2), wedges 2 are used, supported by the projection 3 of the pole teeth whose objective is to channel the magnetic flow from the rotor to the stator. These small projections 3 represent an added cost in the manufacture of the stamping forms as they are areas of great tension when cutting the magnetic plate. These punches may not hold, given their number, and they may require the use of durable materials that are usually expensive or the use of expensive treatments to make the materials more durable.

One of the objectives of the patent is to use a geometry that facilitates the winding insertion, saving time in the manufacture of the motor, as well as a reliable system of attaching the winding without the need for the pole teeth projections that make the forms more expensive.

In the specific field of servomotors, where high-grade precision positioning is required without losing any motor performance, one of the tools used by servomotor manufacturers is the phenomenon known as cogging. This phenomenon, that can be defined as the torque fluctuation produced by the interaction between the permanent magnets and the stator slots. It is due to the reluctance variation that occurs in the magnets in their movement or when they are not in front of the slots. This torque variation must be compensated for by the servosystem when necessary, which heightens the cost for motor control, as supplementary currents, will be necessary to compensate the movement from stable to unstable positions.

It is evident that the smaller the motor, the fewer slots can be made in the stator, for questions of space. In the same way, fewer slots mean a bigger angle between one slot and another, which means that during a rotation the reluctance variation between slot and pole tooth will be higher and, therefore, the cogging will be greater. With a greater interior diameter, it is possible to have a higher number of slots in the stator, so the peaks due to the position jumps of the rotor in front of the stator will be lesser in value. One of the reasons why it is uncommon to find compact size brushless servomotors is their relatively low performance given the cost of operation. The decrease in cogging in small sized servomotors represents a major improvement for this market.

An example of a system known in the prior art is given in French patent application 2 776 856 disclosing a grooved part of an electrical motor with permanent magnets, forming the rotor or the stator of the motor.

An aim of the present invention is to improve the known systems.

A further aim of the present invention is to provide a motor with a constant magnetic air gap so that the magnets do not exhibit reluctance variation and thus achieving a lower level of cogging than standard geometries.

This invention brings with it an added value in the design of brushless motor stators, where the magnetic plate option was not conceived as the only possible option. The appearance in the market of composite magnetic materials with acceptable levels of magnetic permeability allow for the realization of new geometries different from the classical ones, which lower stator production costs of the raw material and the manufacturing process.

The grooved part according to the present invention is defined in claim 1. Various embodiments of the invention are defined in the dependent claims.

The invention will be best understood by the description of an embodiment with reference to the drawings in which the grooved part is the stator of an electrical motor. The man with skills in the art may apply the teaching of the following description to the rotor of an electrical motor with permanent magnets.
Figure 1 shows a stator design of the prior art;
Figure 2 shows a solution according to the prior art;
Figure 3 shows an inner part of the stator according to the invention;
Figure 4 shows an outer part of the stator according to the invention;
Figure 5 shows a perspective view of a part of the stator according to the invention;
Figures 6A and 6b show the insertion of the two parts forming the stator according to the invention;
Figure 7 shows a variant of the part according to figure 5;
Figure 8 shows another embodiment of the stator according to the invention.

According to the invention, a stator is proposed which comprises two pieces of composite magnetic material (see figures 3 and 4). The first piece is an interior ring 5 in the form of a sheave where spaces 6 between teeth 7 will position the motor winding.

The particularity of this interior ring 5 resides in its design, where all the teeth 7 are joined in back by a concentric closing ring 8 which is some tenths of a millimeter wide. The existence of this closing ring 8, concentric with the centre of the rotor rotation, preferably has an even width throughout its circumference surface, except for the teeth 7. This is fundamental for cogging reduction because with the rotor rotation the magnets do not exhibit reluctance variation as they are always at the same distance from the ferromagnetic material and therefore do not generate a static torque pulse. However, the thickness of this closing ring 8 will depend on the piece's dimensions. It needs to be sufficiently thick to be able to consistently hold the teeth and permit the insertion of the coils 12. Nevertheless, at the same time it cannot be very thick given that in the interior part 9 of the rotor must fit so that the magnetic flow from it though the ring cannot close without crossing the teeth (consequently, the coils 12) and close through the second piece 10 that functions as a magnetic yoke (see figure 4).

It is inevitable that part of the flow is channelled through the closed ring, and does not cross the windings later. From the magnetic point of view, it could be interesting that it is the as small as possible in counter position to the aforementioned. Using simulation programs of mechanically and magnetically finite elements a compromise solution can found that will define the thickness of the closing ring 8 according to its dimensions, the type and geometry of the magnets, and the use that the motor is put to.

The exterior ring 10 as represented in figure 4 is anchored to the interior ring 5 by several corresponding notches 11 to avoid relative rotary displacement between the two pieces 5 and 10 when they are in operation and stop them from generating system vibrations when the motor is mounted.

The anchoring between both pieces 5 and 10 can be done using other systems like gluing, mechanical interference or modifying the form of the ends of the teeth 7 so they are not rounded (straight, dove-tailed...) and can be inserted into the notches 11.

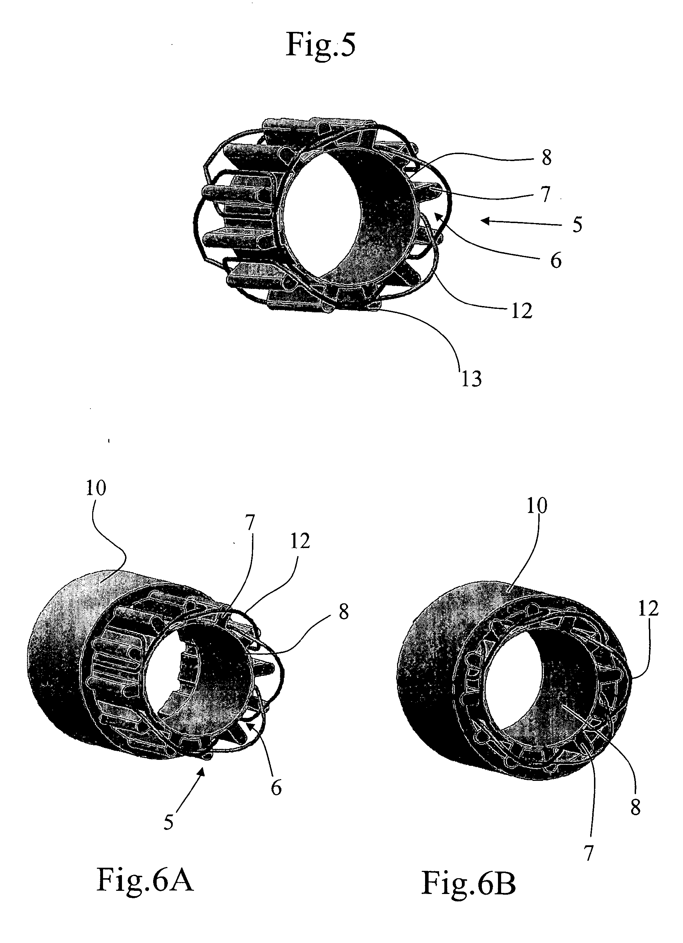

It is believed, however, that the rounded shape is the one that involves the least edges, thus avoiding the risk of damaging the wire 12 varnish when inserting the coil (see figure 5) and therefore avoiding the possible mass current jumps that it could cause.

It should be pointed out that there is an extraordinary advantage that comes with having spaces of the same grade of opening for the insertion of the coil, as it permits the wires 12 to be positioned in a much better way and, consequently, it maximizes the factor of copper filling with respect to the spaces 6.

Once the winding of wires 12 is inserted into the spaces 6, fastening wedges as taught by the prior art (see figure 2 or FR 2 776 856) will no longer be needed. The exterior ring 10 will be inserted directly over the interior ring 5, as shown in figures 6A and 6B, acting as a magnetic yoke that fastens the coils perfectly. As represented in figure 6A, the interior ring 5 is inserted laterally into the exterior ring 10, with the teeth 7 entering corresponding notches 11. In figure 6B, the stator is shown with the interior ring 5 in position in the exterior ring 10.

Another advantage of this invention is the reduction of live edges found in classic electric motors, made of magnetic plate. The stators according to the invention are made of magnetic material composites and formed by pressing (sintering) the magnetic powder inside a mold and a posterior curing process at a determined temperature according to the quality of the resin that covers the powder. The material used for sintering is commonly known as soft magnetic powder composites (SMC) which are continuously improving their performances during last few years. Any similar material may be used.

This allows giving radius in those zones where edges are live and can damage the winding. An example would be the edges indicated in Figure 5 at reference 13.

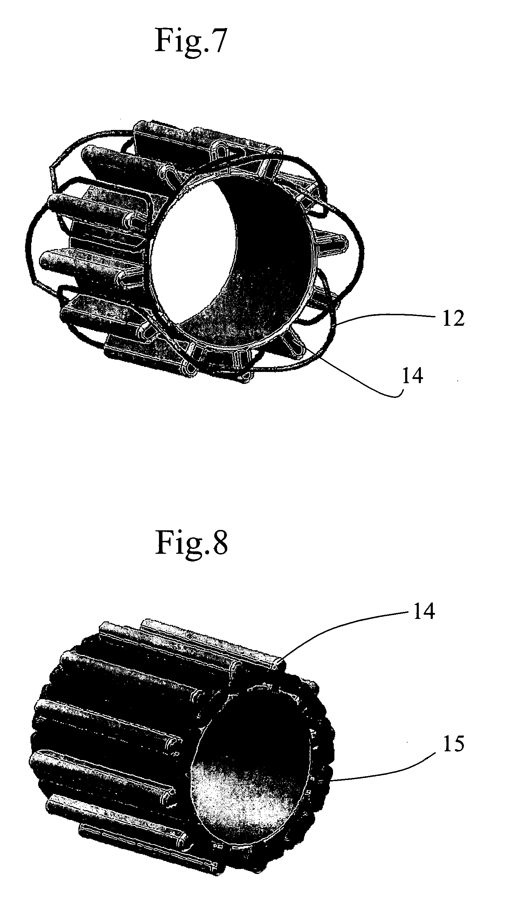

The cost of making a mold for forming the pieces will be higher with this small modification to avoid such edges 13, but there is the important advantage of not needing electrical insulation between the coils and the stator as there will be no rough surface or live edge. Later the higher cost of the mold will pay off quickly. The result of this modification can be seen in figure 7, shown with reference 14, i.e. teeth with rounded edges.

By avoiding an insulation as is shown in figure 2 with reference 4, the space available to the wire 13 increases considerably, making it possible with a stator of identical volume to obtain higher torque and more power.

By having all of the edges of the teeth 14 rounded, as shown in figure 7, it is also possible to envisage other types of windings than that shown in Figure 7. For example, one can use teeth windings with the advantage that it brings, i.e. with the winding directly on the teeth does not require the previous step of making the coils and after, inserting them in the slots 11 of the ring 10. The result could be spectacular for the high quality of the coil's fit in the teeth and the smallness of the coil heads. The result is represented schematically in Figure 8, with rounded teeth 14, and the coil referenced 15.

As mentioned above the grooved part may be the rotor of an electrical motor with permanent magnets offering the same advantages as for the stator. Special skill is not required for manufacturing a rotor instead of a stator as previously described. The main difference is that the exterior ring must be thinner than that of a stator.

The invention brings several advantages such as:
-) much lower cost than that of classic stators or rotors;
-) allows a direct insertion of the winding on the stator or the rotor while the coils are being made;
-) when the winding is not on top, the winding insertion is much less expensive;
-) possible elimination of the insulation;
-) higher factor of copper filling per slot;
-) superior ratio torque/volume
-) raw composite material costs lower than that of magnetic plate;
-) less cogging;
-) stator durability;
-) high frequency applications, as the iron losses resulting from the magnetic plate are considerably lessened with magnetic dust composites.

## Claims

1. A grooved part of an electric motor with permanent magnets, wherein said grooved part is made of an interior ring (5) formed by a closing ring (8), teeth (7), said closing ring and teeth being made by sintering, and further comprising winding of wires (12, 15) around said teeth.

2. A grooved part as claimed in claim 1, wherein it further comprises an exterior ring (10) inserted over said interior ring (5).

3. A grooved part as claimed in claim 2, wherein said exterior ring (10) is made by sintering.

4. A grooved part as claimed in one of claims 1 to 3, wherein said teeth (7) cooperate with corresponding notches (11) in said exterior ring when inserting said exterior ring (11) over said interior ring (5).

5. A grooved part as claimed in one of the preceding claims, wherein the edges (13) of the teeth (7) are rounded.

6. A grooved part as claimed in one of the preceding claims, wherein the interior ring (5) and the exterior ring (11) are made of magnetic material, such as soft magnetic powder composites (SMC).

7. A grooved part as claimed in one of the preceding claims, wherein the grooved part is the stator of the electrical motor.

8. A grooved part as claimed in one of the preceding claims, wherein the grooved part is the rotor of the electrical motor.
